Europäisches Patentamt

European Patent Office

Office européen des brevets

(11) Numéro de publication: **0 390 678**

**A1**

## DEMANDE DE BREVET EUROPEEN

(21) Numéro de dépôt: **90400842.2**

(22) Date de dépôt: **28.03.90**

(51) Int. Cl.⁵: **G21C 19/38, F24F 9/00**

(30) Priorité: **30.03.89 FR 8904151**

(43) Date de publication de la demande:
**03.10.90 Bulletin 90/40**

(84) Etats contractants désignés:
**DE GB**

(71) Demandeur: **COMMISSARIAT A L'ENERGIE ATOMIQUE**
**31/33, rue de la Fédération**
**F-75015 Paris(FR)**

(72) Inventeur: **Vigla, Dominique**
**1 rue Abraham Lincoln**
**F-92220 Bagneux(FR)**

(74) Mandataire: **Mongrédien, André et al**
**c/o BREVATOME 25, rue de Ponthieu**
**F-75008 Paris(FR)**

(54) **Goulotte d'évacuation de pièces équipée d'une barrière aéraulique et application à un ensemble de retraitement d'éléments combustibles irradiés.**

(57) La goulotte selon l'invention permet d'évacuer vers un bain de rinçage (4) des embouts (2) d'éléments combustibles irradiés, tout en évitant des remontées de vapeur d'acide nitrique (6).

La goulotte comprend un conduit principal (8) qui est équipé d'une barrière aéraulique. Celle-ci consiste à provoquer des circulations descendante (16) et ascendante (18) d'azote pour refouler les vapeurs ascendantes (6) et d'éventuelles chutes de poudre (14) provenant de la cisaille. Selon l'invention un gradient thermique est provoqué, pour s'opposer à celui créé par la remontée des vapeurs d'acide nitrique (6). Une enveloppe calorifuge (22) entoure la partie supérieure (12) de la goulotte et une enveloppe de refroidissement (20) est placée autour de la partie inférieure du conduit central (8).

Application au retraitement des combustibles nucléaires.

FIG. 1

## GOULOTTE D'EVACUATION DE PIECES EQUIPEE D'UNE BARRIERE AERAULIQUE ET APPLICATION A UN ENSEMBLE DE RETRAITEMENT D'ELEMENTS COMBUSTIBLES IRRADIES.

L'invention relève du domaine de l'évacuation de pièces vers un milieu d'où émanent des vapeurs nocives ou des vapeurs que l'on ne souhaite pas voir remonter dans la goulotte d'évacuation. Ceci est le cas en particulier, dans une installation de traitement ou de retraitement d'éléments combustibles irradiés.

En effet, les éléments combustibles irradiés issus d'une centrale nucléaire subissent un retraitement spécial. Ils sont en particulier stockés, puis soumis à divers traitements, dans le but d'extraire les matières radioactives qui seront confinées et stockées selon les règles de sûreté en vigueur, pour assurer la protection des hommes et de l'environnement.

Chaque élément combustible comprend deux pièces métalliques appelées embouts, entre lesquelles sont maintenus les crayons combustibles. Ces derniers sont assemblés par centaine et sont constitués par des tubes métalliques de petit diamètre, mais de plusieurs mètres de long, et contenant le combustible. Ils sont maintenus parallèles entre eux par des entretoises métalliques transversales et sont maintenus à leurs extrémités par un embout.

Après un stockage en piscine pour permettre une diminution importante de la radioactivité et l'évacuation de la chaleur des éléments combustibles, ceux-ci sont cisaillés et débités en petits tronçons. Ils sont ensuite envoyés dans différents bains pour dissoudre les matériaux combustibles. Ainsi, les embouts sont envoyés dans un bain d'acide nitrique.

Il est connu d'utiliser en dessous de la cisaille, une ou plusieurs goulottes pour diriger les différentes parties cisaillées dans différents bains de traitement. Ainsi donc, une goulotte disposée à la verticale des embouts, lors de leur cisaillement, les évacue dans un bain d'acide nitrique. Un problème majeur d'une telle installation réside dans le fait qu'il faut empêcher des vapeurs gazeuses d'acide nitrique, issues du bain dans lequel ont barboté des embouts de combustibles irradiés, de remonter vers la cisaille, et ainsi d'occasionner des endommagements et d'éventuelles pollutions radioactives.

On utilise déjà certaines goulottes équipées d'une barrière aéraulique, c'est-à-dire utilisant des courants de fluide gazeux pour empêcher les remontées de vapeurs. Une telle goulotte est constituée principalement d'une partie centrale légèrement inclinée, reliant le dessous de la cisaille au bain d'acide nitrique, dans lequel les embouts tombent par gravité. Elle est équipée de buses latérales injectant de l'air, ou de l'azote de manière à créer des turbulences ou des barrages gazeux, empêchant les vapeurs acides de remonter vers la cisaille.

Ainsi, on sait créer une barrière aéraulique dynamique qui peut être de régime laminaire. On utilise pour cela deux buses projetant des jets plans le long des parois, disposés symétriquement sur les faces latérales de la goulotte pour créer un écoulement laminaire dans une zone où règnent des vitesses opposées et supérieures à la vitesse de diffusion des molécules de vapeurs nitreuses.

Le rendement et l'efficacité d'une telle goulotte ainsi équipée ne s'avèrent pas entièrement satisfaisants, étant donné la limitation imposée du débit gazeux.

Le but de l'invention est de remédier à cet inconvénient en améliorant un tel type de goulotte.

A cet effet, l'objet principal de l'invention est une goulotte d'évacuation par gravité de pièces vers un bain de liquide à une température déterminée dégageant des vapeurs et créant ainsi un gradient thermique ascendant négatif. La goulotte comporte une extrémité inférieure, un conduit central débouchant au-dessus du bain du liquide par l'extrémité inférieure et une extrémité supérieure. Elle est équipée d'une barrière aéraulique pour empêcher les vapeurs du bain de remonter dans la goulotte par l'extrémité inférieure, ladite barrière étant constituée entre autres d'une circulation descendante des gaz d'un premier débit déterminé dans la partie supérieure du conduit central pour refouler lesdites vapeurs.

Selon l'invention, la barrière aéraulique est également constituée de moyens pour créer dans le conduit central un gradient thermique inverse au gradient thermique engendré par les vapeurs du bain de liquide.

La goulotte selon l'invention est avantageusement complétée d'une circulation ascendante de gaz d'un deuxième débit moins important que le premier débit, dans l'extrémité supérieure pour stopper l'arrivée de gaz chargé de poudre.

De manière préférentielle, les moyens pour créer le gradient thermique inverse sont constitués d'une enveloppe de refroidissement placée autour de la partie inférieure du conduit central, et d'une enveloppe calorifuge placée autour de l'extrémité supérieure, le gaz injecté étant à la température du bain liquide.

Une réalisation de la goulotte selon l'invention utilise de l'eau glacée pour alimenter l'enveloppe de refroidissement.

Le gaz utilisé est de préférence de l'azote.

Selon un autre objet principal de l'invention, l'application d'une telle goulotte s'effectue dans un ensemble de retraitement d'éléments combustibles irradiés. La goulotte est alors placée en dessous d'une cisaille d'embouts d'assemblages nucléaires, pour guider lesdits embouts dans un bain de rinçage, le liquide étant de l'acide nitrique.

De préférence, la circulation ascendante est dix fois moins importante que la circulation descendante de gaz.

L'invention et ses différentes caractéristiques techniques seront mieux comprises à la lecture de la description qui suit et qui est annexée des figures représentant respectivement :

     - figure 1, une goulotte d'évacuation selon l'invention ;

     - figure 2, ladite goulotte selon l'invention installée dans un ensemble de retraitement d'éléments combustibles irradiés.

La goulotte d'évacuation comprend principalement un conduit central 8 pour guider des pièces 2 dans leur chute par gravité vers un bain liquide 4. L'extrémité inférieure 10 de la goulotte arrive au moins jusqu'à la surface du liquide. Une extrémité supérieure 12 de la goulotte est placée en dessous de l' endroit, d'où proviennent les pièces 2 à guider dans le bain liquide 4. L'exemple de réalisation représenté sur les figures ci-jointes montre un conduit central 8 incliné. Ceci correspond à une réalisation utilisée dans le cadre du retraitement d'éléments combustibles irradiés.

Le bain de liquide 4 est à une température déterminée T généralement plus élevée que la température ambiante dans le conduit central 8. Des vapeurs 6 se dégagent de ce bain liquide 4 et créent ainsi un gradient thermique ascendant négatif à l'intérieur du conduit central 8. Ces vapeurs 6 progressent donc dans le conduit central 8, à partir de l'extrémité inférieure 10, en direction de l'extrémité supérieure 12 de la goulotte.

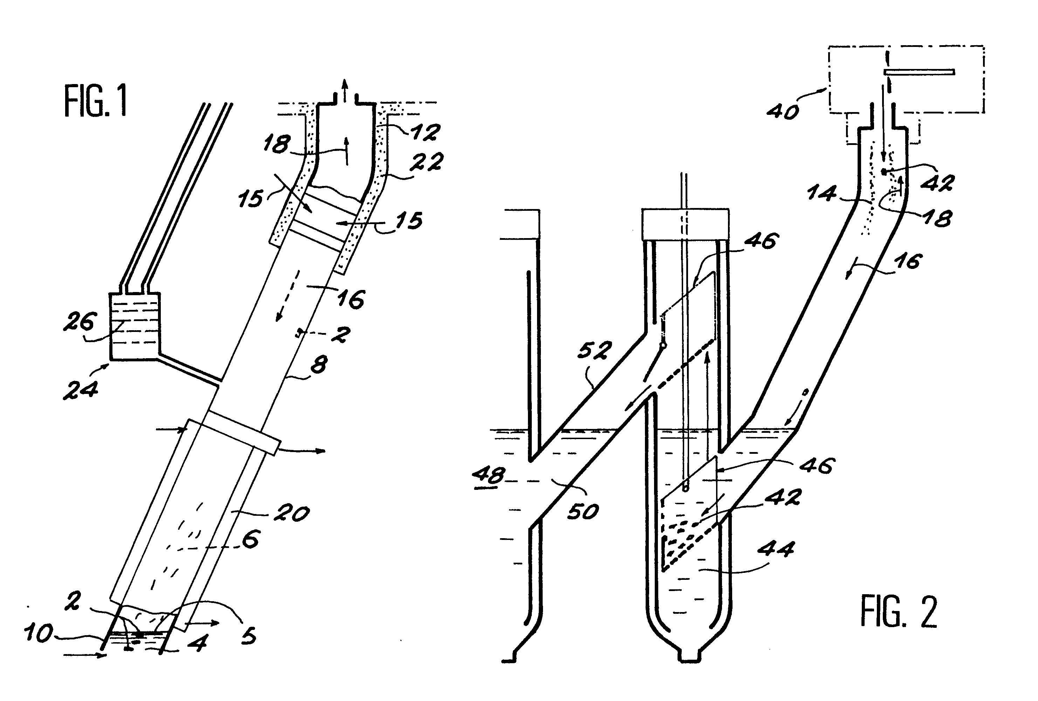

Celle-ci comporte une barrière aéraulique, symbolisée sur la figure 1 par une arrivée de gaz 15 injecté à l'intérieur de la goulotte et se partageant en une circulation descendante 16 de ce gaz et une circulation ascendante 18 de ce même gaz. Cette arrivée 15 est placée dans la partie supérieure du conduit principal 8, juste en dessous de l'extrémité supérieure 12 de la goulotte. La circulation descendante 16 est destinée à stopper la progression des vapeurs 6 issues du bain liquide 4. La circulation ascendante 18 est destinée à stopper l'arrivée de gaz chargé de poudre 14 pénétrant par l'extrémité supérieure 12. De manière générale, la circulation descendante de gaz 16 a un premier débit déterminé $D_1$ plus important que le deuxième débit déterminé $D_2$ de la circulation ascendante de gaz 18. On réalise une telle distribution de gaz à l'intérieur de la goulotte à l'aide de buses 19, placées autour de la partie supérieure du conduit principal 8, à la hauteur de l'arrivée de gaz 15. Ces buses 19 peuvent être orientées vers le bas pour favoriser le fort débit $D_1$ de la circulation descendante des gaz 16 par rapport au débit $D_2$ de la circulation ascendante 18.

La circulation descendante 16 de gaz est extraite du conduit principal par un évent 24 placé juste au dessus de l'enveloppe calorifuge 22. Cet évent 24 est relié à un circuit de traitement des gaz non représentés. Il comprend toutefois une colonnette à plateaux perforés 26 arrosés d'acide nitrique.

La principale caractéristique technique de la goulotte selon l'invention est que cette dernière est constituée de moyens pour créer dans le conduit central 8 un gradient thermique s'opposant à celui provoqué par les vapeurs 6. En effet, ces dernières montant à l'intérieur du conduit central 8, l'extrémité inférieure 10 de la goulotte est donc à une température très voisine de la température T du bain de liquide 4. Comme une simple barrière aéraulique, telle que décrite précédemment, utilise l'injection d'un gaz à une température plus faible que la température T du bain liquide, un gradient thermique ascendant négatif est créé à l'intérieur du conduit principal 8. Les moyens mis en oeuvre dans la goulotte selon l'invention visent à contrecarrer un tel gradient en créant un gradient thermique s'opposant au précédent. A cet effet, on réchauffe la partie supérieure de la goulotte et on réfrigère la partie inférieure de cette goulotte.

Le réchauffage de la partie supérieure se fait principalement en injectant du gaz chaud au moyen de l'arrivée de gaz 15 et des buses 19. Ainsi, les circulations descendantes 16 et ascendantes 18 peuvent être réalisées avec des gaz à une température avoisinant la température T du bain liquide 4. Pour maintenir cette température dans la partie supérieure de la goulotte, et en particulier à l'extrémité supérieure 12, l'invention prévoit d'utiliser une enveloppe calorifuge 22 entourant complètement l'extrémité supérieure 12 de la goulotte. Cette enveloppe calorifuge 22 peut également descendre en dessous de l'arrivée de gaz 15 dans la partie supérieure du conduit central 8.

Le deuxième principal moyen pour obtenir ce gradient thermique opposé au gradient thermique provoqué par les vapeurs ascendantes 6 du bain liquide 4, consiste à utiliser une enveloppe de refroidissement 20, placée autour de la partie inférieure du conduit central 8. Ceci a pour but de refroidir beaucoup plus rapidement les vapeurs 6.

Le gaz injecté dans la partie supérieure du conduit central 8 est de préférence de l'azote. En ce qui concerne la partie inférieure de ce conduit central 8, l'enveloppe de refroidissement 20 est alimentée en eau glacée.

L'efficacité d'une telle goulotte d'évacuation est commentée dans l'application qui en est faite pour le retraitement d'éléments combustibles irradiés, tels que décrits ci-après.

En référence à la figure 2, la goulotte est placée dans le cadre de son utilisation principale, c'est-à-dire, le retraitement de combustibles irradiés. Elle est donc ici placée en dessous d'une cisaille 40, représentée schématiquement par un cadre en traits mixtes. Cette cisaille 40 permet de découper en tronçons les différentes parties des éléments combustibles irradiés et notamment les embouts 42 placés à chaque extrémité d'un élément combustible. Le découpage est une opération génératrice de poudres qui ont tendance à descendre. La partie inférieure de cette cisaille 40 comporte une trémie divisée en deux parties par une cloison verticale, chaque partie étant reliée par une goulotte d'évacuation. Les embouts coupés 42 tombent verticalement dans la partie de la trémie située à la verticale du chariot porte-outils. Cette partie de trémie est donc reliée directement avec l'extrémité supérieure 12 de la goulotte d'évacuation. L'extrémité inférieur 10 de la goulotte plonge les embouts 42 dans un bain liquide d'acide nitrique 44, dans lequel ils doivent barboter. Cette action de rinçage étant terminée, un dispositif élévateur 46 sort les embouts 42 de ce bain d'acide 44, pour les expédier dans un deuxième bain de rinçage 48. Les embouts 42 pénètrent dans ce deuxième bain 48 de manière identique à leur acheminement dans le premier bain 44, en l'occurrence à l'aide d'une goulotte inclinée 52.

La goulotte, telle qu'elle est utilisée dans l'ensemble de retraitement selon la figure 2, a une largeur légèrement supérieur à 500 mm et sa longueur est de quelques mètres. Son inclinaison est d'environ de 65° par rapport à l'horizontale. Le bain d'acide nitrique est à une température T, égale à environ 85°C. Dans ces conditions, l'azote injecté dans la partie supérieure du conduit principal 8 de la goulotte a cette même température avoisinant 85°C. La longueur efficace de l'enveloppe calorifuge 22 peut avoisiner deux mètres. Dans de telles conditions, une haute efficacité de l'installation est obtenue lorsque les débits $D_1$ et $D_2$ des circulations respectivement descendante 16 et ascendante 18 sont respectivement égales à une cinquantaine de mètres cubes par heure et environ quatre à cinq mètres cubes par heure, c'est-à-dire à rapport de dix.

De manière préférentielle, la section de la goulotte est carrée, chaque côté ayant une largeur égale à 600 mm.

Une telle goulotte permet donc de refouler complètement les vapeurs d'acide nitrique ascendantes et les gaz descendants, chargés de poudres 14 issus du cisaillage.

## Revendications

1. Goulotte d'évacuation par gravité de pièces (2) vers un bain de liquide (4) à une température déterminée (T) dégageant des vapeurs (6) et créant ainsi un gradient thermique ascendant négatif, la goulotte comportant un conduit central (8) débouchant au-dessus du bain liquide (4) par une extrémité inférieure (10) et comportant une extrémité supérieure (12), la goulotte étant équipée d'une barrière aéraulique pour empêcher lesdites vapeurs (6) de remonter dans la goulotte par l'extrémité inférieure (10), ladite barrière étant constituée entre autres d'une circulation descendante de gaz (16) d'un premier débit déterminé ($D_1$), dans la partie supérieure du conduit central (8) de la goulotte pour refouler lesdites vapeurs (6), la goulotte étant caractérisée en ce que la barrière aéraulique est également constituée de moyens (20, 22) pour créer dans le conduit central (8) un gradient thermique inverse du gradient thermique engendré par les vapeurs (6) du bain liquide (4).

2. Goulotte selon la revendication 1, caractérisée en ce que la barrière aéraulique est constituée également d'une circulation ascendante (18) de gaz, d'un deuxième débit ($D_2$) moins important que le premier débit ($D_1$) dans l'extrémité supérieure (12), pour stopper l'arrivée de gaz chargé de poudre.

3. Goulotte selon la revendication 1 ou 2, caractérisée en ce que les moyens pour créer le gradient thermique inverse sont constitués de :
- une enveloppe de refroidissement (20) placée autour de la partie inférieure du conduit central (8) ; et
- une enveloppe calorifuge (22), placée autour de l'extrémité supérieure (12), le gaz injecté étant à la température (T) du bain liquide (4).

4. Goulotte selon la revendication 3, caractérisée en ce que l'enveloppe de refroidissement (20) est alimentée en eau glacée.

5. Goulotte selon l'une quelconque des revendications précédentes, caractérisée en ce que le gaz utilisé est de l'azote.

6. Ensemble de retraitement d'éléments combustibles irradiés utilisant une goulotte selon l'une quelconque des revendications précédentes, ladite goulotte étant placée en dessous d'une cisaille (40) d'embouts (42) d'assemblage nucléaire pour guider lesdits embouts (42) dans un bain de rinçage (44) d'acide nitrique.

7. Ensemble de retraitement selon la revendication 6, caractérisé en ce que le premier débit ($D_1$) de la circulation ascendante (18) est dix fois moins important que le deuxième débit ($D_2$) de la circulation descendante de gaz (16).

FIG. 1

FIG. 2

EP 0 390 678 A1

Office européen
des brevets

**RAPPORT DE RECHERCHE EUROPEENNE**

Numero de la demande

EP    90 40 0842

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | DE-A-2451471 (A. SCHEEL)<br>* page 1, dernier alinéa - page 2, alinéa 1 *<br>* page 2, dernier alinéa; figure *<br>--- | 1 | G21C19/38<br>F24F9/00 |
| A | FR-A-1555613 (SAINT GOBAIN)<br>* page 2, colonne de gauche; figure 2. *<br>--- | 1, 6 | |
| A | FR-A-2324093 (SAINT GOBAIN)<br>* page 5, lignes 23 - 34; figure 1 *<br>--- | 1, 6 | |
| A | FR-A-1539924 (CEA)<br>* page 1, colonne de droite, alinéas 3 - 4; figure *<br>----- | 1, 3 | |

**DOMAINES TECHNIQUES RECHERCHES (Int. Cl.5 )**

G21C
F24F
B01F

Le présent rapport a été établi pour toutes les revendications

| Lieu de la recherche | Date d'achèvement de la recherche | Examinateur |
|---|---|---|
| LA HAYE | 22 JUIN 1990 | CAPOSTAGNO E. |

EPO FORM 1503 03.82 (P0402)